# EUROPÄISCHE PATENTANMELDUNG

(11) **EP 1 561 930 A1**
(43) Veröffentlichungstag der Anmeldung: **10.08.2005**
(21) Anmeldenummer: 04030941.1
(22) Anmeldetag: 29.12.2004
(51) Int. Cl.: F02D 41/00, F02D 41/14

(54) **Verfahren zum Regeln einer Brennkraftmaschine**

(30) Priorität: 09.02.2004 AT 1852004
(71) Anmelder: GE Jenbacher GmbH & Co. OHG, 6200 Jenbach (AT)
(72) Erfinder: Herdin, Günther, 6200 Jenbach (AT); Chvatal, Dieter, 6200 Jenbach (AT); Schulze, Matthias, 6020 Innsbruck (AT)
(74) Vertreter: Torggler, Paul N.

(57) **Zusammenfassung**

Verfahren zum Regeln einer Brennkraftmaschine, insbesondere mit magerer Betriebsweise, zum Erreichen vorgebbarer Stickoxydemissionswerte der Brennkraftmaschine, wobei der λ-Wert eines in der Brennkraftmaschine zu verbrennenden Brennstoff-Luft-Gemisches oder ein in einer eindeutigen Beziehung zu diesem λ-Wert stehender Ersatzmotorparameter in Abhängigkeit der zugeführten Brennstoffmenge pro Zeiteinheit oder in Abhängigkeit der zugeführten Brennstoffenergie pro Zeiteinheit (Q_{zu}) geregelt wird.

## Beschreibung

Die vorliegende Erfindung betrifft ein Verfahren zum Regeln einer Brennkraftmaschine, insbesondere mit magerer Betriebsweise, zum Erreichen vorgebbarer Stickoxydemissionswerte der Brennkraftmaschine sowie eine entsprechende Regeleinrichtung und Brennkraftmaschine.

Aus der EP 0 259 382 B1 ist es bereits bekannt, eine Brennkraftmaschine zum Antrieb eines elektrischen Generators mit konstanten Stickoxidemissionswerten zu betreiben, indem man den Gemischdruck vor den Einlassventilen der Zylinder in Abhängigkeit der vom Generator abgegebenen elektrischen Leistung regelt. Hierbei wird der Soll-Wert des Gemischdrucks vor den Einlassventilen aus einem Kennlinienfeld, das die Abhängigkeit des Gemischdrucks von der abgegebenen elektrischen Leistung bei konstanten Emissionswerten zeigt, entnommen. Über eine Verstellung des Brennstoff-Luft-Verhältnisses in einem Gasmischer wird dann der gemessene Ist-Wert des Druckes vor den Einlassventilen auf seinen über das Kennlinienfeld bestimmten Soll-Wert geregelt. Die hierfür verwendete Kennlinie wird durch Einmessen von zumindest zwei Betriebspunkten mit gleichen NOₓ-Emissionswerten erzeugt. Durch dieses bisher bekannte Verfahren ist es möglich, dass eine Brennkraftmaschine die gewünschten Emissionswerte in einem weiten Leistungsbereich sehr genau einhalten kann. Das aus dem genannten europäischen Patent bekannte System hat den Vorteil, dass es praktisch ohne Verschleiß und Alterung von empfindlichen Sensoren auskommt.

In der europäischen Patentanmeldung EP 1 225 330 A2 wird ein weiter verbessertes, gattungsgemäßes System vorgestellt, bei dem das aus der EP 0 259 382 B1 bekannte Regelschema noch durch eine Zündzeitpunktverstellung ergänzt wurde, um in jedem Betriebszustand eine Regelreserve für das schnelle Reagieren auf Laständerungen bereitzustellen. Darüber hinaus dient diese Regelung dazu, die Brennkraftmaschine immer mit einem optimalen Wirkungsgrad zu fahren.

Nachteil dieser bekannten Regelschemata ist es, dass immer ein für die von der Brennkraftmaschine abgegebene Leistung charakteristisches Signal zur Verfügung stehen muss. Bei Brennkraftmaschinen, die einen Generator zur Erzeugung elektrischen Stroms antreiben, kann hierfür die abgegebene elektrische Leistung verwendet werden. Für andere Motoren, z. B. zum Antrieb von Pumpen, steht ein entsprechendes Leistungssignal jedoch in der Regel nicht zur Verfügung und müsste zur Anwendung der oben genannten Regelschemata somit mittels teurer Zusatzsensoren extra gemessen werden.

Aufgabe der vorliegenden Erfindung ist es daher, ein gattungsgemäßes Regelverfahren zur Verfügung zu stellen, bei dem auf ein gemessenes Leistungssignal verzichtet werden kann.

Dies wird erfindungsgemäß erreicht, indem der λ-Wert eines in der Brennkraftmaschine zu verbrennenden Brennstoff-Luft-Gemisches oder ein in einer Beziehung zu diesem λ-Wert stehender Ersatzmotorparameter in Abhängigkeit der zugeführten Brennstoffmenge pro Zeiteinheit oder in Abhängigkeit der zugeführten Brennstoffenergie pro Zeiteinheit geregelt wird.

Erfindungsgemäß ist es somit vorgesehen, anstatt der abgegebenen Leistung der Brennkraftmaschine die zugeführte Brennstoffmenge pro Zeiteinheit oder die zugeführte Brennstoffenergie pro Zeiteinheit als Basisgröße für die Regelung zu verwenden. Geregelt wird dabei der λ-Wert oder ein damit in einer Beziehung stehender Ersatzmotorparameter. Der λ-Wert beschreibt, wie allgemein bekannt, das Luftverhältnis bei Verbrennungsvorgängen, wobei λ = 1 einer stöchiometrischen Verbrennung entspricht. Als Ersatzmotorparameter kann zum Beispiel der Druck vor den Einlassventilen der Brennkraftmaschine oder der Heizwert des zu verbrennenden Brennstoff-Luft-Gemisches oder aber auch ein Stickoxidemissionswert aus den Abgasen verwendet werden. Die zugeführte Brennstoffmenge pro Zeiteinheit wird günstigerweise mit Hilfe einer Durchflussmessung bestimmt. Basiert die Regelung auf der zugeführten Brennstoffenergie pro Zeiteinheit, so wird die Durchflussmessung in Kombination mit einer Heizwertmessung am Brennstoff durchgeführt. Durch Multiplikation der beiden Messwerte erhält man die zugeführte Brennstoffenergie pro Zeiteinheit.

Neben dem genannten Verfahren betrifft die Erfindung auch eine Regeleinrichtung zur Durchführung des Verfahrens sowie eine Brennkraftmaschine mit einer solchen Regeleinrichtung.

Weitere Einzelheiten und Merkmale der vorliegenden Erfindung ergeben sich aus der nachfolgenden Figurenbeschreibung. Dabei zeigt:
- Fig. 1: ein schematisch dargestelltes Kennlinienfeld zur Verwendung beim erfindungsgemäßen Verfahren,
- Fig. 2: ein erstes Ausführungsbeispiel eines erfindungsgemäßen Regelverfahrens in schematischer Darstellung und
- Fig. 3: ein zweites erfindungsgemäßes Ausführungsbeispiel, bei dem zusätzlich noch eine Zündzeitpunktverstellung vorgesehen ist.

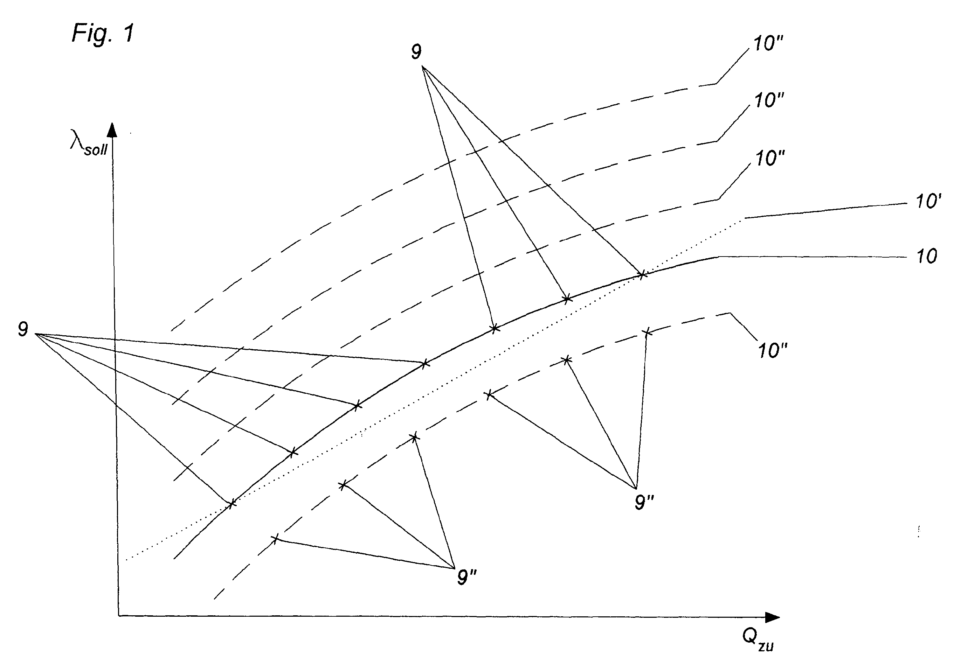

Fig. 1 zeigt schematisch die Abhängigkeit des λ-Soll-Wertes von der zugeführten Brennstoffenergie pro Zeiteinheit Q_{zu}. Auf der durchgezogen dargestellten Kennlinie 10 liegen all diejenigen Betriebspunkte der Brennkraftmaschine, welche jeweils einen bestimmten Stickoxidemissionswert aufweisen. Erzeugt wird die Kennlinie bzw. das Kennlinienfeld durch Eichmessungen, zum Beispiel bei der Inbetriebnahme der Brennkraftmaschine. Dies geschieht, indem an einem Betriebspunkt 9 bei gegebenem Q_{zu}-Wert ein λ-Sollwert so eingestellt wird, sodass sich der gewünschte Stickoxidemissionswert der Brennkraftmaschine ergibt. Um eine Kennlinie 10 zu erzeugen, wird dann zumindest ein zweiter Betriebspunkt 9 durch entsprechendes Einstellen eines anderen Wertes der zugeführten Brennstoffenergie pro Zeiteinheit angefahren, wobei wiederum der λ-Soll-Wert z.B. durch Verstellen des Brennstoff-Luft-Verhältnisses bestimmt wird, bei dem der gewünschte Stickoxidemissionswert erreicht ist. Aus den beiden so bestimmten Betriebspunkten 9 ergibt sich in erster Näherung eine lineare Kennlinie 10' (gepunktet dargestellt). Werden mehr als zwei Betriebspunkte 9 mit der genannten Vorgehensweise bei konstanten Stickoxidemissionswert eingemessen, so kann sich hieraus auch eine gekrümmte Kurve, wie die Kennlinie 10, ergeben.

Bei Brennkraftmaschinen, bei denen sich gewisse Betriebsparameter, wie zum Beispiel die Temperatur t₂' des Brennstoff-Luft-Gemisches oder der Zündzeitpunkt ZZP oder die Qualität des zugeführten Brennstoffes stark ändern können, kann es darüber hinaus sinnvoll sein, den Einfluss auch dieser Parameter zu berücksichtigen. Hieraus ergibt sich dann in der Regel ein Kennlinienfeld. Fig. 1 zeigt beispielhaft verschiedene Kennlinien 10" gestrichelt dargestellt, die sich bei entsprechendem Einmessen von Betriebspunkten 9" bei jeweils konstanten Stickoxidemissionswerten und jeweils verschiedenen Temperaturwerten t₂' ergeben. Bei der Berücksichtigung mehrerer Einflussparameter ergibt sich dann insgesamt ein mehrdimensionales Kennlinienfeld. Alternativ können, basierend auf einer einzelnen Kennlinie 10, aber auch entsprechende Korrekturwerte für die Temperatur des Brennstoff-Luft-Gemisches t₂' oder den Zündzeitpunkt (ZZP) oder weitere Einflussparameter berücksichtigt werden. Um den Aufwand beim Einmessen des Kennlinienfeldes nach der oben geschilderten Vorgehensweise in Grenzen zu halten, können auch Schätzungen angewendet werden, wenn der Einfluss eines bestimmten Parameters bekannt ist.

Auch wenn Fig. 1 lediglich ein Kennlinienfeld für die Abhängigkeit zwischen dem Soll-Wert von λ und der zugeführten Brennstoffenergie (Q_{zu}) zeigt, so ergeben sich doch für die Abhängigkeiten der genannten Ersatzmotorparameter (Druck vor den Einlassventilen, Heizwert des Brennstoff-Luft-Gemisches oder Stickoxidemissionswert) von der zugeführten Brennstoffmenge pro Zeiteinheit oder der zugeführten Brennstoffenergie pro Zeiteinheit ähnliche Kennlinien oder Kennlinienfelder.

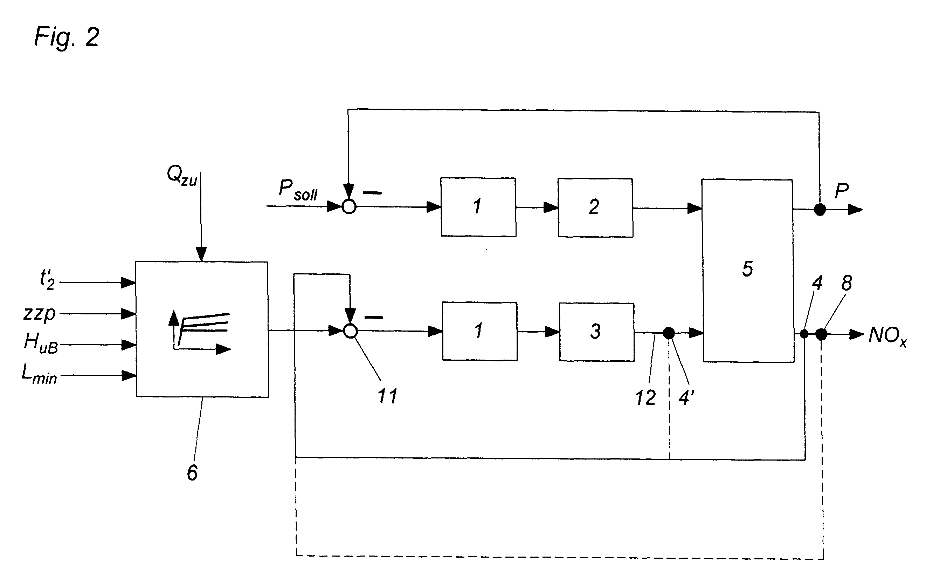

Fig. 2 zeigt ein erstes erfindungsgemäßes Regelverfahren für eine Brennkraftmaschine. Diese weist zunächst, wie an sich bekannt, einen Leistungsregler auf, bei dem ein PID-Regler 1 ein Leistungsstellglied 2 (zum Beispiel eine Drosselklappe oder ein Umblasventil der zu regelnden Brennkraftmaschine) in der Weise verstellt, dass die vom Motor 5 abgegebene Leistung P dem gewünschten Leistungssollwert P-Soll entspricht. Erfindungsgemäß ist nun eine Regelstrecke für den Motor 5 vorgesehen, bei der zum Erreichen konstanter Stickoxidemissionswerte (NOₓ), die im Kennlinienfeld 6 abgelegte Abhängigkeit des λ-Wertes oder eines Ersatzmotorparameters von der zugeführten Brennstoffmenge pro Zeiteinheit oder der zugeführten Brennstoffenergie pro Zeiteinheit (Q_{zu}) ausgenützt wird. Erläutert wird dieser Regelstrang zunächst anhand eines Beispiels, das auf der Abhängigkeit des λ-Wertes von der zugeführten Brennstoffenergie pro Zeiteinheit (Q_{zu}) basiert.

Beim Betrieb der Brennkraftmaschine wird mittels einer Durchflussmesseinrichtung und einer Heizwertsonde in der Brennstoffzuleitung der Brennkraftmaschine die Durchflussmenge und der Heizwert des Brennstoffes gemessen. Durch Multiplikation dieser beiden Werte ergibt sich die zugeführte Brennstoffenergie pro Zeiteinheit Q_{zu} (in J/s). Anhand dieses Q_{zu}-Wertes wird dann im in Fig. 1 beschriebenen Kennlinienfeld 6 der entsprechende λ-Soll-Wert bestimmt. Hierbei kann je nach Bedarf die Temperatur t₂' des Brennstoff-Luft-Gemisches und/oder der Zündzeitpunkt ZZP und/oder der Heizwert des Brennstoffes H_{UB} und/oder der stöchiometrische Mindestluftbedarf Lₘᵢₙ berücksichtigt werden. Der so bestimmte Soll-Wert des λ-Wertes wird in der Vergleichseinrichtung 11 mit einem mittels der λ-Sonde 4 im Abgastrakt gemessenen Ist-Wert des λ-Wertes verglichen. Die Anpassung des Ist-Wertes an den Soll-Wert erfolgt mittels eines PID-Reglers 1, der eine Einrichtung 3 zur Einstellung des Brennstoff-Luft-Gemisches ansteuert.

Das in Fig. 2 anhand der Parameter Q_{zu} und λ-Wert erläuterte Regelschema funktioniert in analoger Weise auch für die bereits erwähnten Ersatzmotorparameter (als Ersatz für den λ-Wert) und die zugeführte Brennstoffmenge pro Zeiteinheit (als Ersatz für Q_{zu}). Hierzu muss lediglich ein jeweils passendes Kennlinienfeld 6 und eine entsprechende Messsonde verwendet werden. Wird als Ersatzmotorparameter der Heizwert des Brennstoff-LuftGemisches gewählt, so ist zur Bestimmung dessen Ist-Wertes in der Brennstoff-LuftGemisch-Zuleitung 12 eine, vorzugsweise online-messende, Heizwertsonde 4' (als Alternative gestrichelt dargestellt) anzuordnen. Wird als Ersatzmotorparameter der Druck vor den Einlassventilen gewählt, so ist eine entsprechende Druckmesseinrichtung zu wählen. Auch diese wird günstigerweise in der Brennstoff-Luft-Gemisch-Zuleitung 12 angeordnet. Alternativ hierzu kann jedoch, wenn das Regelschema auf dem Stickoxidemissionswert der Brennkraftmaschine beruhen soll, auch abgasseitig eine Einrichtung 8 zur Messung der Stickoxidemissionswerte verwendet werden. In Fig. 2 ist diese Variante gestrichelt dargestellt. Die Bestimmung der im Kennlinienfeld eventuell zu berücksichtigenden Parameter t₂', ZZP, H_{UB} und/oder Lₘᵢₙ erfolgt gemäß dem Stand der Technik, wobei eine entsprechende Temperatursonde zur Messung von t₂' günstigerweise ebenfalls in der Brennstoff-Luft-Gemisch-Zuleitung 12 angeordnet ist. Das Ersetzen des Parameters Q_{zu} durch die nur mittels einer Durchflussmessung bestimmte zugeführte Brennstoffmenge pro Zeiteinheit (Einheit m³/s; gegebenenfalls umgerechnet auf Normbedingungen) empfiehlt sich in der Regel nur bei gleichbleibender Qualität des Brennstoffes. Die Qualität des Brennstoffes kann beispielsweise durch eine Heizwertmessung am Brennstoff charakterisiert werden.

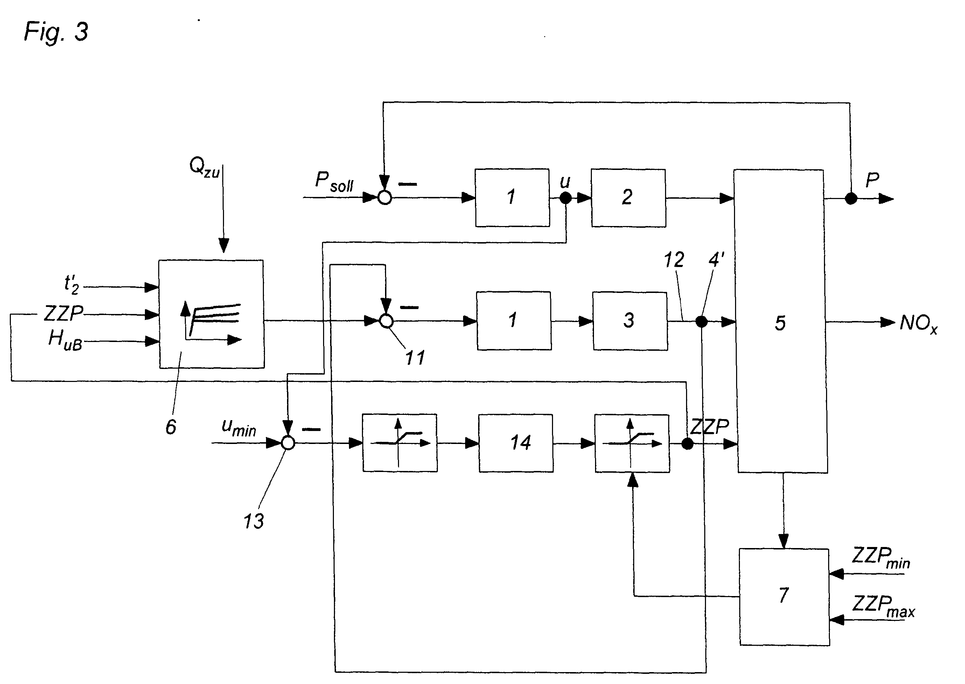

Das in Fig. 2 gezeigte erste erfindungsgemäße Regelschema ist in Fig. 3 noch durch einen Regelstrang zur Zündzeitpunktverstellung ergänzt. Durch diesen kann sichergestellt werden, dass zur schnellen Reaktion auf Lastwechsel am Verbrennungsmotor 5 immer eine Regelreserve vorhanden ist. Hierzu wird zwischen dem Leistungsstellglied 2 und dem zugeordneten PID-Regler 1 ein Signal U, welches charakteristisch für die Regelreserve des Leistungsstellgliedes 2 ist, abgegriffen. Beim Vergleich im Punkt 13 wird überprüft, ob die Regelreserve größer als ein vorbestimmtes Minimum Uₘᵢₙ ist. Ist dies nicht der Fall, so erfolgt mittels der Zündzeitpunkteinstelleinrichtung 14 eine Verstellung des Zündzeitpunktes innerhalb vorgegebener Grenzen ZZPₘᵢₙ und ZZPₘₐₓ. Zusätzlich kann hierbei noch ein Klopfregler 7 vorgesehen sein, welcher durch Begrenzung des Verstellbereiches verhindert, dass es durch Verschieben des Zündzeitpunktes zum Klopfen des Motors 5 kommt. Durch den in Fig. 3 zusätzlich gezeigten Regelstrang wird sowohl die gewünschte Regelreserve sichergestellt, als auch immer ein optimaler Wirkungsgrad der Brennkraftmaschine erreicht. Darüber hinaus ist auch eine Anpassung an die Umgebungsbedingungen (z.B. Druck und Temperatur) durch Verstellung des Zündzeitpunktes möglich. Die Zündzeitpunktverstellung selbst entspricht der in der europäischen Patentanmeldung EP 1 225 330 A2 geoffenbarten Vorgehensweise, sodass hiermit darauf verwiesen wird.

Das erfindungsgemäße Verfahren ist besonders zum Betrieb von fremdgezündeten und/oder gemischaufgeladenen, vorzugsweise stationären, Otto-Motoren günstig, welche vorzugsweise mit einem brennbaren Gas, zum Beispiel Methan, als Brennstoff betrieben werden.

## Patentansprüche

1. Verfahren zum Regeln einer Brennkraftmaschine, insbesondere mit magerer Betriebsweise, zum Erreichen vorgebbarer Stickoxydemissionswerte der Brennkraftmaschine, **dadurch gekennzeichnet, dass** der λ-Wert eines in der Brennkraftmaschine zu verbrennenden Brennstoff-Luft-Gemisches oder ein in einer eindeutigen Beziehung zu diesem λ-Wert stehender Ersatzmotorparameter in Abhängigkeit der zugeführten Brennstoffmenge pro Zeiteinheit oder in Abhängigkeit der zugeführten Brennstoffenergie pro Zeiteinheit (Q_{zu}) geregelt wird.

2. Verfahren nach Anspruch 1, **dadurch gekennzeichnet, dass** der Brennstoff ein brennbares Gas, z.B. Methan, ist.

3. Verfahren nach Anspruch 1 oder 2, **dadurch gekennzeichnet, dass** die zugeführte Brennstoffmenge pro Zeiteinheit mit Hilfe einer Durchflussmessung bestimmt wird.

4. Verfahren nach Anspruch 1 oder 2, **dadurch gekennzeichnet, dass** die zugeführte Brennstoffenergie pro Zeiteinheit (Q_{zu}) mit Hilfe einer Durchflussmessung in Kombination mit einer Heizwertmessung des Brennstoffes bestimmt wird.

5. Verfahren nach einem der Ansprüche 1 bis 4, **dadurch gekennzeichnet, dass** der in einer Beziehung zum λ-Wert stehende Ersatzmotorparameter ein Druck vor den Einlassventilen der Brennkraftmaschine ist.

6. Verfahren nach einem der Ansprüche 1 bis 4, **dadurch gekennzeichnet, dass** der in einer Beziehung zum λ-Wert stehende Ersatzmotorparameter ein Heizwert des Brennstoff-LuftGemisches ist.

7. Verfahren nach einem der Ansprüche 1 bis 4, **dadurch gekennzeichnet, daß** der in einer Beziehung zum λ-Wert stehende Ersatzmotorparameter ein Stickoxydemissionswert ist.

8. Verfahren nach einem der Ansprüche 1 bis 7, **dadurch gekennzeichnet, dass** eine Abhängigkeit von Sollwerten des λ-Wertes oder des Ersatzmotorparameters von der zugeführten Brennstoffmenge pro Zeiteinheit oder der zugeführten Brennstoffenergie pro Zeiteinheit (Q_{zu}) in einem Kennlinienfeld (6) abgelegt und beim Betrieb der Brennkraftmaschine aus diesem herausgelesen wird.

9. Verfahren nach einem der Ansprüche 1 bis 8, **dadurch gekennzeichnet, dass** der Einfluss des Zündzeitpunktes (ZZP) und/oder der Temperatur (t_{2'}) des Brennstoff-Luft-Gemisches und/oder die Qualität des Brennstoffes und/oder der stöchiometrische Mindestluftbedarf (Lₘᵢₙ), bei der Bestimmung der Abhängigkeit des Sollwertes des λ-Wertes oder des Sollwertes des Ersatzmotorparameters von der zugeführten Brennstoffmenge pro Zeiteinheit oder der zugeführten Brennstoffenergie pro Zeiteinheit berücksichtigt bzw. korrigiert wird.

10. Verfahren nach Anspruch 9, **dadurch gekennzeichnet, dass** die Qualität des Brennstoffes über eine Heizwertmessung am Brennstoff bestimmt wird.

11. Verfahren nach einem der Ansprüche 1 bis 10, **dadurch gekennzeichnet, dass** ein Istwert des λ-Wert bzw. des Ersatzmotorparameters erfasst, vorzugsweise direkt gemessen und auf einen Sollwert geregelt wird, wobei der Sollwert in Abhängigkeit von der zugeführten Brennstoffmenge pro Zeiteinheit oder in Abhängigkeit von der zugeführten Brennstoffenergie pro Zeiteinheit (Q_{zu}) bestimmt wird.

12. Verfahren nach Anspruch 11, **dadurch gekennzeichnet, dass** der genannte Ist-Wert durch Verstellen des Mischungsverhältnisses des Brennstoff-Luft-Gemisches an den genannten Sollwert angepasst wird.

13. Verfahren nach einem der Ansprüche 1 bis 12, **dadurch gekennzeichnet, dass** zur Bereitstellung einer Regelreserve bei der Leistungsregelung eine Zündzeitpunktverstellung vorgesehen ist.

14. Regeleinrichtung zur Durchführung des Verfahrens nach einem der Ansprüche 1 bis 13.

15. Brennkraftmaschine mit einer Regeleinrichtung nach Anspruch 14.

16. Brennkraftmaschine nach Anspruch 15, **dadurch gekennzeichnet, dass** sie eine Einrichtung (3) zur Einstellung des Brennstoff-Luft-Verhältnisses aufweist.

17. Brennkraftmaschine nach Anspruch 15 oder 16, **dadurch gekennzeichnet, dass** sie eine Durchflussmesseinrichtung in einer Brennstoffzuleitung aufweist.

18. Brennkraftmaschine nach Anspruch 17, **dadurch gekennzeichnet, dass** in der Brennstoffzuleitung eine Heizwertsonde (4') zur Bestimmung des Heizwertes des Brennstoffes angeordnet ist.

19. Brennkraftmaschine nach einem der Ansprüche 15 bis 18, **dadurch gekennzeichnet, dass** in einer Brennstoff-Luft-Gemisch-Zuleitung (12) von der Einrichtung (3) zur Mischung des Brennstoff-Luft-Gemisches zu mindestens einem Zylinder der Brennkraftmaschine eine Heizwertsonde (4') zur Bestimmung des Heizwertes des Brennstoff-Luft-Gemisches und/oder eine Temperatursonde zur Bestimmung der Temperatur (t_{2'}) des Brennstoff-Luft-Gemisches angeordnet ist.

20. Brennkraftmaschine nach einem der Ansprüche 15 bis 19, **dadurch gekennzeichnet, dass** sie eine Einrichtung (8) zur Messung der Stickstoffemission aufweist.

21. Brennkraftmaschine nach einem der Ansprüche 15 bis 20, **dadurch gekennzeichnet, dass** sie in einem Abgastrakt eine λ-Sonde (4) aufweist.

22. Brennkraftmaschine nach einem der Ansprüche 15 bis 20, **dadurch gekennzeichnet, dass** sie ein fremdgezündeter und/oder gemischaufgeladener, vorzugsweise stationärer, Otto-Motor ist.
